# EUROPÄISCHE PATENTANMELDUNG

(11) **EP 4 756 501 A1**
(43) Veröffentlichungstag der Anmeldung: **10.06.2026**
(21) Anmeldenummer: 25209658.1
(22) Anmeldetag: 20.10.2025
(51) Int. Cl.: G02B 5/00, G02B 5/02, G02B 27/01, B60K 35/40

(54) **GERÄT MIT STÖRLICHTUNTERDRÜCKUNG**

(30) Priorität: 03.12.2024 DE 102024211542; 26.06.2025 DE 102025124805
(71) Anmelder: AUMOVIO Germany GmbH, 60488 Frankfurt am Main (DE)
(72) Erfinder: Brohm, Thomas, 60488 Frankfurt am Main (DE)
(74) Vertreter: Aumovio Corporation

(57) **Zusammenfassung**

Die Erfindung betrifft ein Gerät mit einer Optikeinheit (3), welche zumindest eine innenliegende Wandung (35) aufweist, die mit einer Oberflächenstruktur (351) versehen ist. Die Oberflächenstruktur (351) weist Kavitäten (352) auf. Ein solches Gerät findet vorteilhaft Verwendung in einem Head-Up-Display mit Störlichtunterdrückung.

## Beschreibung

Die vorliegende Erfindung betrifft Geräte mit Störlichtunterdrückung, insbesondere Head-Up-Displays zur Erzeugung eines virtuellen Bildes an der Windschutzscheibe eines Kraftfahrzeugs. Unter einem Head-Up-Display, auch als HUD bezeichnet, wird ein Anzeigesystem verstanden, bei dem der Betrachter seine Blickausrichtung in Fahrtrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einer bildgebenden Einheit oder PGU (Picture Generating Unit), einer Optikeinheit und einer Spiegeleinheit. Die bildgebende Einheit erzeugt das Bild und nutzt dazu zumindest ein Anzeigeelement. Die heutigen Head-Up-Displays verwenden zur Bildgenerierung üblicherweise Matrix-Displays oder scannende Bildgeber. Displays können beispielsweise LC-Displays (LC: Liquid Crystal; Flüssigkristall), µ-LED-Displays (LED: Light Emitting Diode; Leuchtdiode), LCoS-Displays (LCoS: Liquid Crystal on Silicon; Flüssigkristall auf Silizium) oder DMD-Systeme (DMD: Digital Micromirror Device; Digitale Mikrospiegel-Einheit) sein. Ein Beispiel für ein scannendes System ist ein Laser-Scanning-System. Die Optikeinheit leitet das Bild auf die Spiegeleinheit. Die Spiegeleinheit ist eine teilweise spiegelnde, lichtdurchlässige Scheibe. Der Betrachter sieht also die von der bildgebenden Einheit dargestellten Inhalte als virtuelles Bild und gleichzeitig die reale Welt hinter der Scheibe. Als Spiegeleinheit dient im Automobilbereich auch die Windschutzscheibe, deren gekrümmte Form bei der Darstellung berücksichtigt wird, beispielsweise durch eine Vorverzerrung des von der bildgebenden Einheit dargestellten Bildes. Durch das Zusammenwirken von Optikeinheit und Spiegeleinheit ist das virtuelle Bild eine vergrößerte und verzerrte Darstellung des von der bildgebenden Einheit erzeugten Bildes.

Der Betrachter kann das virtuelle Bild eines Head-Up-Displays nur aus der Position der sogenannten Eyebox betrachten. Als Eyebox wird ein Bereich von Augenpositionen bezeichnet, innerhalb dessen Höhe und dessen Breite das HUD Bild gesehen werden kann.. Solange sich ein Auge des Betrachters innerhalb der Eyebox befindet, sind alle Elemente des virtuellen Bildes für dieses Auge sichtbar. Befinden sich ein Auge oder beide Augen hingegen außerhalb der Eyebox, so ist das virtuelle für den Betrachter nur noch teilweise oder gar nicht sichtbar. Je größer die Eyebox ist, desto weniger eingeschränkt ist der Betrachter somit bei der Wahl seiner Betrachtungsposition, welche unter anderem durch die Sitzposition beinflusst wird.

Die Optikeinheit eines Head-Up-Displays umfasst in der Regel mehrere Spiegel, um gemeinsam mit dem zusätzlichen Spiegelelement der Windschutzscheibe eine optische Abbildung in der geforderten virtuellen Entfernung zu erhalten. Das von der bildgebenden Einheit ausgehende Licht wird von einem Faltspiegel, der flach oder gekrümmt sein kann, auf einen gekrümmten Hauptspiegelreflektiert, der es dann in Richtung der Windschutzscheibe reflektiert. Die derzeit verwendeten gekrümmten Spiegel sind als im Wesentlichen flache Platten mit einer großen Krümmung entsprechend der gewünschten optischen Funktion ausgeführt. Die Herstellung solcher gekrümmter Spiegel erfolgt beispielsweise in Kunststoff mittels Spritzguss oder Spritzprägen, oder in Glas mittels Schwerkraft-Biegen oder Press-Biegen.

Lichtreflexe in Anzeige-Systemen (Störlicht) können das Licht der Anzeige (Nutzlicht) überlagern und somit störend auf die Ablesbarkeit der Anzeige wirken. Störlicht-Reflexe entstehen durch einfache oder mehrfache Umlenkung des unkontrolliert auftretenden Störlichts, z.B. durch Sonneneinstrahlung, welche besonders hell und störend sein kann. Dabei kann die Umlenkung sowohl durch spekulare Reflektion (Ausfallswinkel gleich Einfallswinkel) als auch durch diffuse Reflektion (Ausfallswinkel unabhängig vom Einfallswinkel) stattfinden.

Bekannte Methoden der Störlicht-Reflex-Vermeidung sind:
A) Geometrische Reflex-Unterdrückung: Mittels Neigung oder Krümmung von Flächen werden Reflexe so abgelenkt, dass diese nicht mehr das Sichtfeld, bzw. die Eyebox, des Anzeige-Betrachters erreichen können.
B) Reflex-Unterdrückung durch Mattierung: Hier werden Flächen durch geeignete Verfahren mattiert, wobei eine erhöhte Absorption in Verbindung mit einer diffusen Aufweitung die Intensität des störenden Reflexes reduziert.
C) Reflex-Unterdrückung durch transparente Interferenz-Schichten:
   Hier wird die Reflexion einfallender Lichtbündel auf transparenten Materialien durch Stapel dünner Schichten mit Hilfe destruktiver Interferenz unterdrückt.
D) Reflex-Unterdrückung durch transparente Mikro-optische Schichten: Hier werden auf hinterleuchteten Displays die flachen Deckgläser mit anteilig transparenten Mikrooptischen Strukturen versehen, die durch Lichtbrechung das Störlicht umverteilen.

Bekannte Implementierungen der Methode A) sind z.B. gekrümmte Deckgläser von Anzeigen wie Kombi-Instrumenten oder Head-Up-Displays. Aber auch die sogenannten Jalousie-Folien nutzen die geometrische Unterdrückung des Störlichts im Verhältnis zum Nutzlicht.

Bekannte Implementierungen der Methode B) sind vielfältig, alle Arten von absorbierenden und/oder rauen Oberflächen sind hier bekannt. Schwarz lackierte Oberflächen wirken vornehmlich durch Absorption, ebenso die bekannte Mottenaugen-Struktur und andere texturierte Oberflächen.

Die Methode C) findet in Anzeige-Systemen z.B. als Anti-Reflex Beschichtung auf TFT-Displays eine bekannte Anwendung und ist ebenso von handelsüblichen Seh-Hilfen oder Kameraobjektiven und Teleskopen bekannt.

In Anwendung befinden sich ferner Kombinationen der Verfahren A) und B), wie zum Beispiel geriffelte Blenden, welche zusätzlich lackiert oder texturiert sind. Auch an der Oberfläche rau mattierte Jalousie-Folien (Privacy Filme) sind verbreitet und nutzen A) und B). Bei transparenten Oberflächen werden A) und B) auch vereinzelt mit C) kombiniert.

Probleme mit dem Stand der Technik
A) Geometrische Reflex-Unterdrückung: Ist vor allem bei diffus reflektierenden Flächen nur eingeschränkt wirksam, erfordert eine Ausrichtung der Oberflächen und benötigt somit zusätzlichen Bauraum, ferner kann die räumliche Anordnung Funktionen der Anzeige (u.a. Einblick) einschränken.
B) Reflex-Unterdrückung durch Mattierung: Ist entweder nur eingeschränkt wirksam oder sehr aufwändig und somit teuer.
C) Reflex-Unterdrückung durch Interferenz-Schichten: Aufwändige Herstellung und Kosten steigen mit der geforderten Güte, die Anwendung ist auf bestimmte Material-Oberflächen beschränkt.
D) Transparente, optische Mikro-Strukturen auf Displays müssen hochpräzise, somit aufwändig, hergestellt werden um störende Nebenwirkungen (z.B. Moiré) zu vermeiden.

US 2020/0371352 A1 betrifft die Reflexreduzierung beim HUD und nennt eine Oberflächen-Struktur auf Flächen im Innern des HUD. Die dort genannten prismenförmigen Rippen und die Pyramiden (auch mit Polygon-Basis im Text beschrieben) weisen gegeneinander geneigte, ebene Flächen auf. Das ist von Nachteil, weil diese für den spekularen Anteil des Streulichts als ,Spiegel' dienen und damit Glanzflächen entstehen, sobald die Fläche zwischen Störlichtquelle und Betrachter im richtigen Winkel steht.

US 2011/0051251 A1 betrifft optisches Element mit Anti-Reflex-Funktion, und zeigt als Oberflächenstruktur Strukturen mit kugelförmigen oder sogar flachen Oberseiten, was nachteilig ist, weil diese für den spekularen Anteil des Streulichts als ,Spiegel' dienen und damit Glanzflächen entstehen, sobald die Fläche zwischen Störlichtquelle und Betrachter im richtigen Winkel steht.

Grenzen bestehender Lösungen sind unter anderem, daß die reale Reflektion, die sich aus diffuser Reflektion und spekularer Reflektion zusammensetzt, dazu führt, dass die geometrische Reflexminderung, welche auf den spekularen Anteil ausgelegt ist, nur eine geringe Wirksamkeit hat. Eine zusätzliche Lackierung dämpft alle Anteile, ändert also daran prinzipiell nichts. Auch wirkt die Geometrie vor allem bei flachem Lichteinfall. Ferner streuen die Oberkanten der Riffel zusätzlich Licht zurück, Täler schlucken mehr Licht und es entsteht ein störendes Hell-Dunkel-Streifenmuster. Eine Verbesserung, insbesondere eine Vermeidung der Nebenwirkung "Streifenmuster im Sichtfeld" ist erwünscht.

Die Erfindung hat zur Aufgabe, die Oberfläche der innenliegenden, undurchsichtigen Bauteile in der Spiegel-Optik eines Head-Up Displays so zu verändern, dass die diffuse Rückstreuung von Sonnenlicht nicht zu störenden Aufhellungen im Sichtfeld des Fahrers führen kann. Hierzu müssen flächige Gehäuseteile erzeugt werden, welche keinerlei Streulicht zurückwerfen und somit tiefschwarz wirken. Solche Gehäuseteile können nicht nur in Anzeigen, sondern überall dort eingesetzt werden, wo Störlicht effektiv unterdrückt werden soll.

Ein erfindungsgemäßes Gerät mit einer Optikeinheit, welche zumindest eine innenliegende Wandung aufweist, die mit einer Oberflächenstruktur versehen ist, ist dadurch gekennzeichnet, daß die Oberflächenstruktur Kavitäten aufweist. Erfindungsgemäß werden somit flächige Strukturen vorgeschlagen, die das reale Streulicht, welches sich aus spekularem und diffusem Streulicht zusammensetzt, effektiv unterdrücken. Diese weisen vorteilhaft Kavitäten auf, in die das Störlicht eindringen kann.

Vorteilhaft sind Zapfen oder Stege zwischen diesen Kavitäten angeordnet. Die Kavitäten sind somit durch Zapfen und/oder Stege gebildet. Durch die Zapfen und/oder Stege entsteht die der Wandung gegenüberliegende, von den Kavitäten unterbrochene und dem Störlicht zugewandte, Oberseite des Bauteils, die bei einer hohen Anzahl Kavitäten pro Fläche quasi homogen wirkt.

Vorteilhaft sind die Zapfen und/oder Stege einerseits an der Wandung angeordnet und weisen andererseits an ihrer der Wandung abgewandten Oberseite keine zur Wandung parallele plane Flächen auf. Dies reduziert weitestgehend die Wahrscheinlichkeit, dass Störlicht bereits an der Oberseite des Bauteils spekular in Richtung des Betrachters reflektiert werden kann.

Vorteilhaft weisen die von Zapfen und/oder Stegen gebildeten Kavitäten eine oberseitige Öffnung parallel zur Fläche der Wandung und eine Höhe senkrecht zur Fläche der Wandung auf, bei welcher das Verhältnis von Höhe zu mittlerer Öffunungsweite einen Wert von 1:2 oder größer aufweist. Dies stellt sicher, dass die Flanken der Zapfen und/oder Stege gegenüber der Wandung beziehungsweise der Oberseite stärker als im Mittel 45° geneigt sind, beispielsweise bei Höhe zu Öffnungsweite 1:1 ergibt sich eine mittlere Neigung der Flanken relativ zur Flächennormalen von 27°. Derart ,steile' Flanken reduzieren weitestgehend die Wahrscheinlichkeit, dass Störlicht an den Flanken in einer einzigen spekularen oder diffusen Reflektion in Richtung des Betrachters zurückreflektiert werden kann.

Vorteilhaft weisen die Kavitäten einen unregelmäßig geformten Querschnitt auf. Hierdurch wird weitestgehend vermieden, dass Störlicht, welches schräg durch oberseitige Öffnungen in die Kavitäten einfällt, spekular zurück reflektiert wird und unmittelbar wieder austreten kann. Stattdessen erfolgt an den unregelmäßigen Flanken der Kavität bevorzugt eine Streuung des Störlichts seitlich weg von der Einfallsrichtung.

Vorteilhaft weisen die Flanken der Kavitäten und/oder die Zapfen und/oder die Stege unebene Begrenzungsflächen auf. Derartige unebene Begrenzungsflächen sind vorteilhaft mittels eines 3D-Druckverfahrens herstellbar, welches bedingt durch die kleinstmöglichen Abmessungen eines 3D-Druck-Materialvolumens automatisch zu unebenen Begrenzungsflächen führt. Die stochastischen Unebenheiten an den Begrenzungsflächen verringern nochmals die Wahrscheinlichkeit, dass Störlicht nach nur wenigen spekularen und/oder diffusen Reflektionen die Kavitäten wieder in Richtung des Betrachters verlassen kann. Hierbei sind stochastische Unebenheiten gemeint, deren Strukturgröße ein Vielfaches der im Störlicht spektral vorhandenen Lichtwellenlängen beträgt.

Vorteilhaft weisen die Flanken der Kavitäten und/oder die Zapfen und/oder die Stege eine breitbandig lichtabsorbierende Oberfläche auf. Je höher die breitbandige spektrale Absorption des Störlichts ist, desto schneller nimmt die Intensität des in den Kavitäten mehrfach spekular oder diffus reflektierten Störlichtanteils ab.

Vorteilhafte Ausgestaltungen, die einzeln oder in Kombination einsetzbar sind, sind somit:
a) Die Kavitäten verfügen über einen veränderlichen Querschnitt.
b) Die Kavitäten weisen keinerlei ebene Begrenzungsflächen an ihren Flanken auf.
c) Die Zapfen oder Stege weisen an der Oberseite keinerlei plane Flächen parallel zur Grundfläche auf.
d) Die Zapfen oder Stege, sowie die Grundfläche, besitzen eine breitbandig Licht-absorbierende Oberfläche.
e) Die Struktur-Höhe der Kavitäten im Verhältnis zu ihrer oberseitigen, mittleren Öffnungsweite beträgt zumindest 1:2.

Vorteilhaft sind als Zapfen Spitzkegel mit runder Basis vorgesehen. Das Problem mit Flächen, die für den spekularen Anteil des Streulichts als ,Spiegel' dienen und damit Glanzflächen entstehen lassen, sobald die Fläche zwischen Störlichtquelle und Betrachter im richtigen Winkel steht, haben die erfindungsgemäßen Spitzkegel mit runder Basis nicht.

Vorteilhaft weisen die Zapfen die Form eines Halmakegels mit Spitzhut auf. Statt eines kugelförmigen Kopfs hat der Halmakegel hierbei einen Spitzhut auf. Die spitze Form reduziert spekulare Reflexe. Die Einbuchtung zwischen dem unteren Teil des Spitzhuts und dem Hals des Halmakegels erhöht die Wahrscheinlichkeit, daß nach oben gerichtete Lichtstrahlen an der Einbuchtung absorbiert werden, wodurch die Störlichtunterdrückung verbessert wird. Nach unten hin erzeugen die benachbarten Kegelkörper eine zunehmende Verengung der Kavitäten derart, dass die darunter folgende Wandung nur minimale ebene Flächen zwischen den eng angeordneten Kegeln aufweist, deren Flächen-Normale zur Öffnung der Kavitäten an der Oberseite gerichtet ist. Diese verbleibenden ebenen Flächen zwischen den Kegeln sind vorteilhaft ebenfalls gekrümmt ausgeführt, um direkte Rückreflektionen bei senkrechtem Störlicht-Einfall zu unterdrücken.

Die Zapfen oder Stege bestehen vorteilhaft aus einem harten Material. Dies hat den Vorteil, dass sie sich nicht ohne weiteres verbiegen oder anderweitig verformen lassen, und so ihre lichtschluckende Eigenschaft auch unter widrigen Einflüssen beibehalten. Geeignete Materialien sind zum Beispiel Kunststoffe, wie Polycarbonat (typisch: E-Modul 2,4 GPa und Zugfestigkeit 65 MPa) oder Polyamid (typisch: E-Modul 1,9 Gpa und Zugfestigkeit 50 MPa).

Vorteilhaft bestehen die Zapfen und/oder die Stege aus einem Material, welches in einem additiven Verfahren aufbringbar ist, wobei die additiv erzeugten, kleinstmöglichen Volumen-Elemente sich nicht zu einer glatten Oberfläche verbinden, sondern wiederum eine Rauigkeit der Oberfläche erzeugen. Beispielsweise erzeugt Polyamid in bestimmten 3D-Druck-Verfahren durch Anhäufung der kleinsten Volumen-Elemente eine körnige Feinstruktur der Oberfläche.

Ein erfindungsgemäßes Head-Up-Display weist eine erfindungsgemäß strukturierte Wandung im Gerät auf. Auf diese Weise wird eine effektive Störlichtunterdrückung erzielt.

Die erfindungsgemäße Störlichtunterdrückung übertrifft lackierte und/oder texturierte Oberflächen deutlich in der Störlichtabsorption. Der Glanzgrad liegt besonders tief und die erfindungsgemäß ausgeführten Oberflächen wirken tief Schwarz. Selbst bei hellem Sonnenlicht als Störlicht kann ein vollständig mattes (glanzloses) und farbneutral dunkles (fast schwarzes) Erscheinungsbild erreicht werden.

Die Erfindung betrifft auch eine Störlicht-Unterdrückung in allen Arten von beleuchteten Geräten oder auch in Räumen.

Weitere Vorteile und Ausgestaltung der Erfindung sind auch der nachfolgenden Beschreibung anhand von Abbildungen entnehmbar. dabei zeigen:
- Fig.1: ein Head-Up-Display für ein Fortbewegungsmittel;
- Fig.2: einen Blick aus dem Innenraum eines Kraftfahrzeugs durch dessen Windschutzscheibe;
- Fig.3: eine Wandung einer Optikeinheit in Schnittdarstellung;
- Fig.4: den Zusammenhang von realer, spekularer und diffuser Reflexion;
- Fig.5: einen vergrößerten Ausschnitt einer Wandung mit Riffelung;
- Fig.6: mehrere erfindungsgemäße Oberflächenstrukturen;
- Fig.7: unterschiedliche Beispiel-Zapfen in Seitenansicht und im Querschnitt;
- Fig.8: ein Beispiel-Gitter mit tubulären Elementen; und
- Fig.9-15: weitere vorteilhafte Oberflächenstrukturen.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

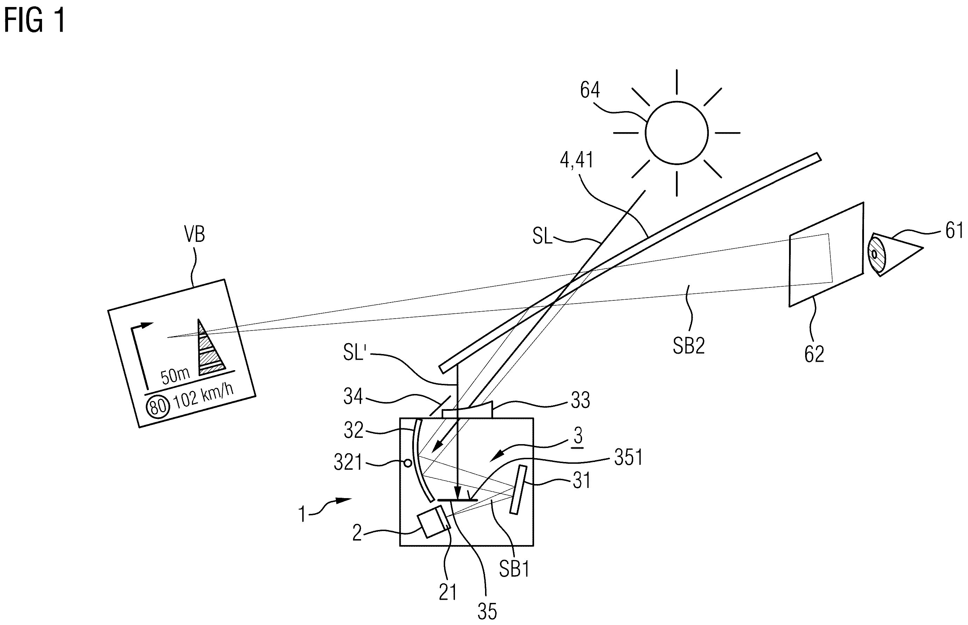

Fig.1 zeigt schematisch ein Head-Up-Display für ein Fortbewegungsmittel als Beispiel für ein Bilderzeugungssystem 1. Das Head-Up-Display weist eine bildgebende Einheit 2, eine Optikeinheit 3 und eine Spiegeleinheit 4 auf. Von einer Projektionsfläche 21 geht ein Strahlenbündel SB1 aus, welches von einem ersten Spiegel 31 auf einen gekrümmten Spiegel 32 reflektiert wird, der es Richtung Spiegeleinheit 4 reflektiert. Die Spiegeleinheit 4 ist hier als Windschutzscheibe 41 des Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 3 und Spiegeleinheit 4 ist das virtuelle Bild VB eine vergrößerte Darstellung des von der Projektionsfläche 21 kommenden Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition. Die Krümmung des gekrümmten Spiegels 32 ist an die Krümmung der Windschutzscheibe 41 angepasst und sorgt dafür, dass die Bildverzeichnung über die gesamte Eyebox 62 möglichst stabil ist. Der gekrümmte Spiegel 32 ist mittels einer Lagerung 321 drehbar gelagert. Die dadurch ermöglichte Drehung des gekrümmten Spiegels 32 ermöglicht ein Verschieben der Eyebox 62 und somit eine Anpassung der Position der Eyebox 62 an die Position des Auges 61. Der erste Spiegel 31 dient dazu, dass der vom Strahlenbündel SB1 zurückgelegte Weg zwischen Projektionsfläche 21 und gekrümmtem Spiegel 32 lang ist und gleichzeitig die Optikeinheit 3 dennoch kompakt ausfällt. Die Optikeinheit 3 wird durch eine transparente Abdeckung 33 gegen die Umgebung abgegrenzt. Die optischen Elemente der Optikeinheit 3 sind somit beispielsweise gegen im Innenraum des Kraftfahrzeugs befindlichen Staub geschützt. Ein Blendschutz 34 dient dazu, über die Grenzfläche der Abdeckung 33 reflektiertes Licht sicher zu absorbieren, sodass keine Blendung des Betrachters hervorgerufen wird. Außer dem Sonnenlicht SL kann auch das Licht einer anderen Störlichtquelle 64 auf die Projektionsfläche 21 gelangen. Die Optikeinheit 3 weist zumindest eine Wandung 35 auf, die mit einer Oberflächenstruktur 351 versehen ist. Position, Ausdehnung und Form der Wandung 35 sind hier nur beispielhaft schematisch dargestellt. Störlicht SL', welches nicht im Winkelbereich des Strahlenbündels SB1 in die Optikeinheit 3 einfällt, aber dennoch für den Betrachter sichtbare Störreflexe hervorrufen kann, wird von der Oberflächenstruktur 351 so beeinflußt, daß diese Störreflexe möglichst wenig auffallen, bestenfalls sogar ganz vermieden werden. Das Störlicht SL' kann von der Sonne oder einer anderen Störlichtquelle 64 stammen, wenn sich diese in einer anderen als der in der Abbildung gezeigten Position befindet.

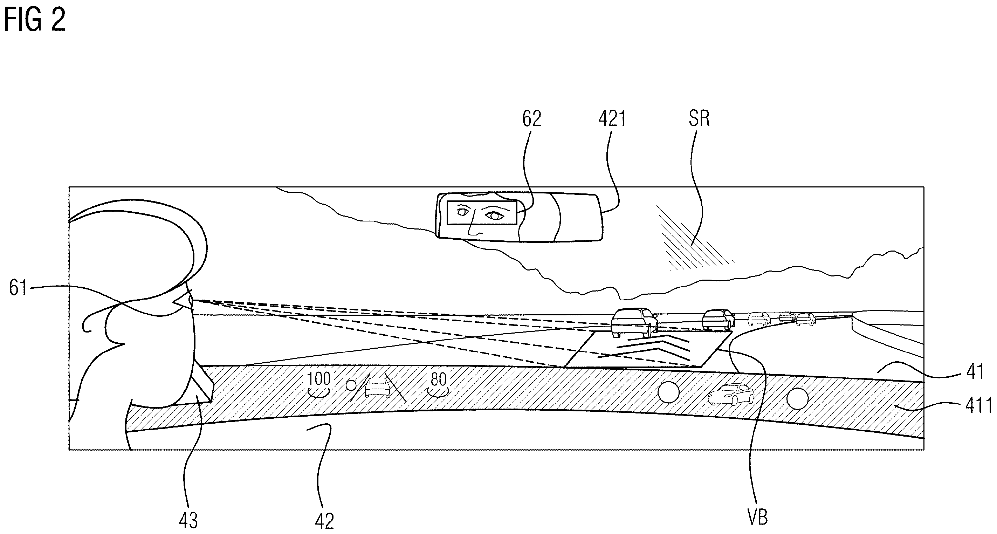

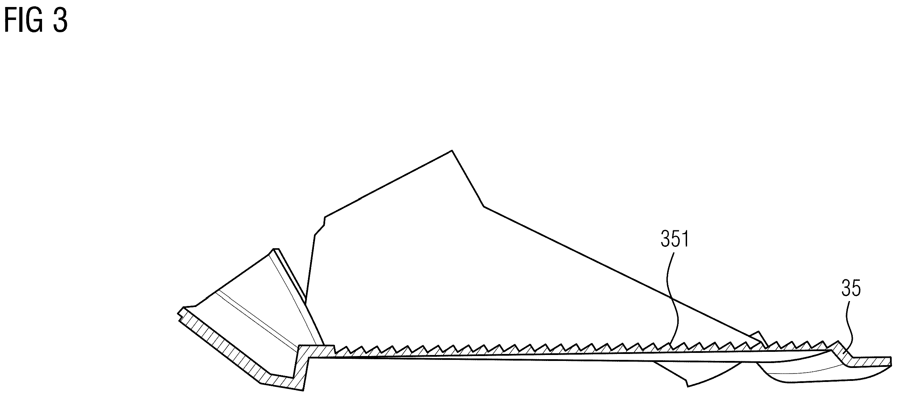

Fig.2 zeigt einen Blick aus dem Innenraum eines Kraftfahrzeugs durch dessen Windschutzscheibe 41. Man erkennt im unteren Bereich der Windschutzscheibe einen Schwarzdruckbereich 411, zwischen Windschutzscheibe 41 und Betrachter eine Abdeckung 42, und, ganz links, den unteren Teil der linken A-Säule 43. Im oberen Bereich der Windschutzscheibe ist ein Rückspiegel 421 angeordnet. In dessen Spiegelbild erkennt man Betrachter und Eyebox 62. Durch die Windschutzscheibe hat der Betrachter einen Blick auf die vor dem Kraftfahrzeug befindliche Straße und die Umgebung. Das virtuelle Bild VB scheint sich auf der Straße zu befinden. Oberhalb des virtuellen Bildes VB ist schematisch ein Störreflex SR angedeutet. Er weist eine Streifenstruktur auf, die von einer geriffelten Oberflächenstruktur 351 einer Wandung 35 der Optikeinheit 3 hervorgerufen wird. Auch wenn sich der hier angedeutete Störreflex SR oberhalb der Straße befindet, kann er zu einer Ablenkung des Betrachters führen. Noch störender ist es, wenn sich ein Störreflex innerhalb des virtuellen Bildes VB oder nahe an diesem befindet. Fig.3 zeigt einen Ansatz der Methode A) + B) in Schnittdarstellung: Die Wandung 35 ist hier eine Innenblende des HUD. Die Wandung 35 ist als linear geriffeltes Bauteil mit schwarzer Lackierung ausgeführt. Die Oberflächenstruktur 351 besteht somit aus im wesentlichen parallel zueinander angeordneten linearen Riffeln. Dies verbessert die diffuse Rückstreuung von der Innenblende ins Sichtfeld des Betrachters. Als Störreflexe SR verbleibt nur eine geringe lineare Riffelung als Hell-Dunkel-Streifen sichtbar und ist kaum störend im Randbereich des vom Betrachter sichtbaren virtuellen Bildes VB wahrnehmbar. Erwünscht ist, eine Oberfläche der Wandung 35, der Innenblende, welche eine mit der Riffelung vergleichbare Unterdrückung diffuser Rückstreuungen erreicht, jedoch keine störend wahrnehmbaren Störreflexe im Bereich des virtuellen Bildes VB bei Sonnen-Einstrahlung oder anderem intensiven Störlicht SL' hervorruft.

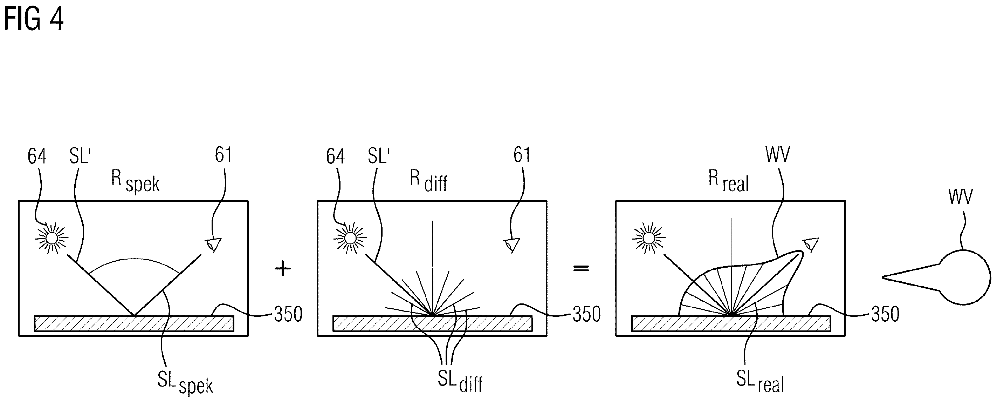

Fig.4 zeigt schematisch, wie sich die reale Reflexion Rᵣₑₐₗ aus spekularer Reflexion Rₛₚₑₖ und diffuser Reflexion R_{diff} zusammensetzt. Bei der spekularen Reflexion Rₛₚₑₖ gelangt Störlicht SL' einer Störlichtquelle 64 auf eine Oberfläche 350 und wird dort gemäß "Einfallswinkel gleich Ausfallswinkel" reflektiert. Das spekular reflektierte Licht gelangt als spekulares Störlicht SLₛₚₑₖ nahezu vollständig in das Auge 61 eines Betrachters. Bei der diffusen Reflexion R_{diff} gelangt Störlicht SL' einer Störlichtquelle 64 auf eine Oberfläche 350 und wird dort diffus gestreut. Das diffus reflektierte Licht verteilt sich in nahezu alle Raumwinkel. Nur ein kleiner Anteil davon gelangt als diffuses Störlicht SL_{diff} in das Auge 61 eines Betrachters. Die Winkelverteilung WV des realen Störlichts SLᵣₑₐₗ setzt sich aus den Winkelverteilungen des spekularen Störlichts SLₛₚₑₖ und des diffusen Störlichts SL_{diff} zusammen, wie im rechten Teil der Abbildung gezeigt. Die Winkelverteilung WV hängt von den spekularen und diffusen Reflexionseigenschaften der Oberfläche 350 ab.

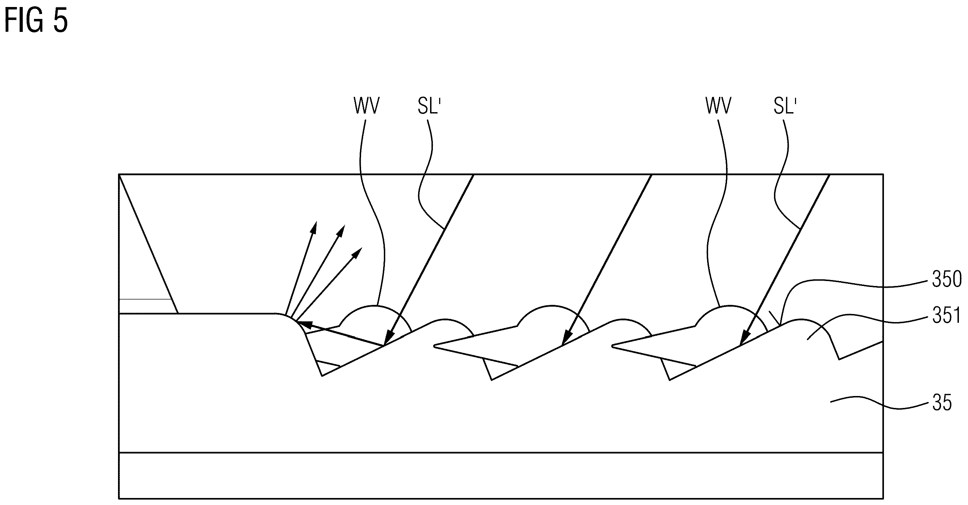

Fig.5 zeigt einen vergrößerten Ausschnitt der Wandung 35 mit Riffelung als Oberflächenstruktur 351 aus Fig.3. Man erkennt das relativ steil von rechts oben einfallende Störlicht SL', welches an der Oberfläche 350 reflektiert wird. Die Winkelverteilung WV der realen Reflexion ist ebenfalls eingezeichnet. Man erkennt, dass das Maximum der Winkelverteilung WV relativ senkrecht auf eine benachbarte Fläche trifft, von der es zu einem Teil absorbiert und zu einem anderen Teil in eine unkritische Richtung reflektiert wird. Ein Teil der Winkelverteilung trifft auf eine Rundung der Oberfläche 350, an der es in viele unterschiedliche Richtungen reflektiert wird. Einige davon tragen zu den unerwünschten Störreflexen SR bei.

Ursache der Hell-Dunkel-Streifen des durch die Riffelung hervorgerufenen Störreflexes SR ist die Tatsache, dass bei gegebener Sonnen-Einstrahlung (Richtung) jede lineare, erhabene Struktur (Riffel) einen Lichtreflex entlang der Kuppen der Oberflächenstruktur 351 erzeugt (heller Streifen) und eine erhöhte Licht-Absorption entlang der dazwischenliegenden Täler (dunkler Streifen). Diese Streifen-Anordnung (Hell-Dunkel-Streifen) ist als Störlicht / Störreflex SR deutlich wahrnehmbar und unerwünscht.

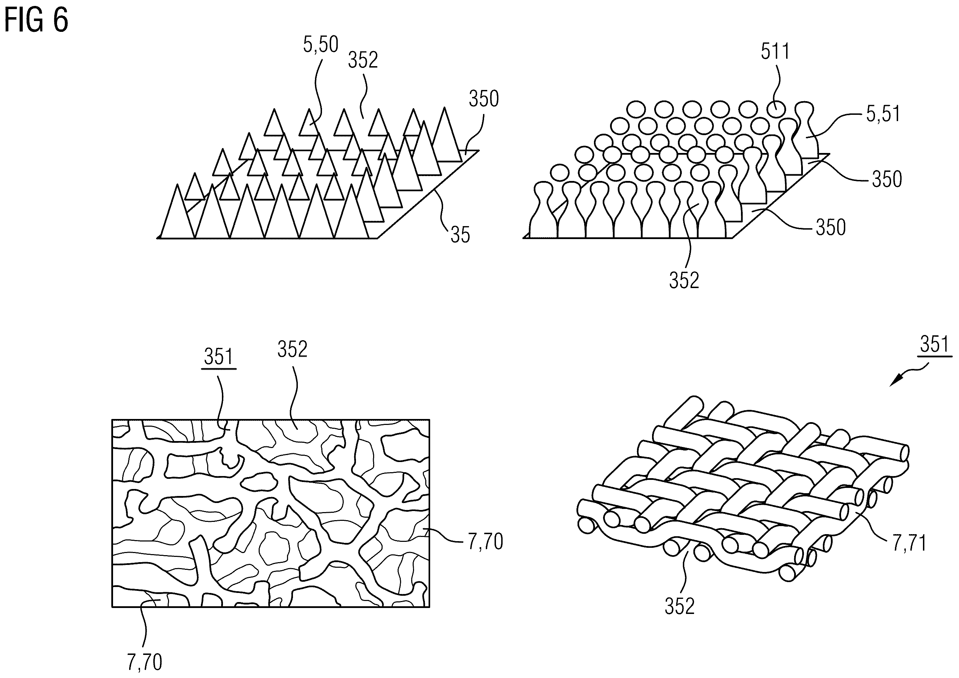

Fig.6 zeigt mehrere erfindungsgemäße Oberflächenstrukturen 351. Links oben ist eine Oberfläche mit einer Kegel-Zapfen-Oberflächenstruktur zu erkennen. Viele Kegel 50 unterschiedlicher Größe sind als eine Ausprägung von Zapfen 5 auf einer Oberfläche 350 einer Wandung 35 angeordnet. Die Kegel 50 sind hier der Einfachheit halber zweidimensional dargestellt. Tatsächlich handelt es sich hierbei aber um dreidimensionale Kegel 50. Die zwischen den Kegeln 50 befindlichen Zwischenräume stellen Kavitäten 352 dar, in denen Licht mehrfach reflektiert und dabei durch Absorption bei jeder Reflexion an Intensität abnimmt. Man erkennt, daß die Kegel 50 keine zur Wandung 35 parallele plane Flächen aufweisen. Man erkennt weiterhin, daß die Kavitäten 352 bei senkrechter Annäherung an die Wandung 35 sich ändernden Querschnitt aufweisen. Rechts oben ist eine Oberfläche mit einer Halma-Zapfen-Oberflächenstruktur zu erkennen. Viele Halmazapfen 51 sind als eine Ausprägung von Zapfen 5 auf einer Oberfläche 350 einer Wandung 35 angeordnet. Auch hier erfolgt der Einfachheit halber eine zweidimensionale Darstellung. Zudem sind die Halmazapfen 51 nur am Rand der gezeigten Oberfläche 350 vollständig gezeigt, in der Mitte der gezeigten Fläche sind nur die Köpfe 511 der Halmazapfen 51 angedeutet. Auch hjer stellen die zwischen den Halmazapfen 51 befindlichen Zwischenräume Kavitäten 352 dar, in denen das Licht abgeschwächt wird. Im unteren Teil der Abbildung sind Maschengitter zu erkennen. Links unten ist eine unregelmäßige Oberflächenstruktur 351 mit räumlich angeordneten Balken 70 als eine Ausprägung von Stegen 7 zu erkennen. Man erkennt auch hier Kavitäten 352 zwischen den Balken 70 der Oberflächenstruktur 351. Diese Kavitäten 352 weisen aufgrund der unregelmäßigen Oberflächenstruktur 351 unregelmäßige Größe und Form auf. Die Oberflächenstruktur 351 weist keine plane Fläche auf, sodaß auch hier keine zu einer hier nicht gezeigten Wandung 35 parallele plane Flächen auftreten. Rechts unten ist eine regelmäßige Oberflächenstruktur 351 aus räumlich verwobenen tubulären Elementen 71 als eine weitere Ausprägung von Stegen 7 zu erkennen. Man erkennt auch hier Kavitäten 352 zwischen den tubulären Elementen 71 der Oberflächenstruktur 351.

Diese alternativen erfindungsgemäßen Lösungen und ihre Wirkung sind flächige Strukturen, die das reale = spekulare + diffuse Streulicht effektiv unterdrücken. Sie weisen auf
a) Kavitäten 352, in die das Störlicht eindringen kann
b) Zapfen 5 oder Stege 7 zwischen diesen Kavitäten 352.

Gleichzeitig
a) verfügen die Kavitäten 352 über einen veränderlichen Querschnitt, und/oder
b) weisen die Kavitäten 352 keinerlei ebene Begrenzungsflächen an ihren Flanken auf, und/oder
c) weisen die Zapfen 5 oder Stege 7 an der Oberseite keinerlei plane Flächen parallel zur Grundfläche der Wandung 35 auf, und/oder
d) besitzen die Zapfen 5 oder Stege 7, sowie die Grundfläche der Wandung 35, eine breitbandig lichtabsorbierende Oberfläche 350, und/oder
e) beträgt die mittlere Struktur-Höhe der Kavitäten 352 im Verhältnis zur mittleren Öffnungsweite ein Verhältnis von 1:2 oder größer.

Es hat sich gezeigt: Eine flächige Anordnung aus Zapfen 5 mit runden Köpfchen 511, auch als Halma-Zapfen-Platte bezeichnet mit Halmazapfen 51 angeordnet auf einer Oberfläche 350, die mit kostengünstiger Acryl-Lack-Farbe in Schwarz gefärbt ist, erreicht vergleichbare Licht-Absorption wie ein mit einem intensiven und teuren Schwarzfarbstoff lackiertes Bauteil. Ersetzt man die Halmazapfen 51 durch Spitzkegel 50, sinkt die Helligkeit des gestreuten Lichts nochmals deutlich.

Die Erfindung schlägt Kavitäten 352 mit veränderlichem Querschnitt vor. Ein wesentliches Merkmal ist die Existenz von einer oder mehreren Engstellen, an denen der Querschnitt der Kavität 352 ein Minimum in ihrem senkrechten Verlauf aufweist. Zum Beispiel befindet sich bei der Halma-Zapfen-Anordnung eine Engstelle zwischen den Köpfchen 511 und eine zweite ganz am unteren Ende der Halmazapfen 51. Ferner verengen sich die Kavitäten dort, wo sich benachbarte Halma-Zapfen berühren, spitz zur Wandung hin. Dort, wo sich benachbarte Halma-Zapfen nicht direkt berühren, begrenzt die Wandung die Kavität mit einer noch verbleibenden, ebenen Fläche. Diese kann jedoch vorteilhaft auch gekrümmt ausgeführt werden, um senkrecht einfallendes und wieder austretendes Störlicht auch noch zu unterdrücken.

Das Maschengitter braucht nicht notwendigerweise quadratisch zu sein, rechteckige oder kompliziertere Gewebe gehen auch. Das regelmäßige und das unregelmäßige Maschengitter aus dem unteren Teil der Fig.6 haben ebenfalls die Kavitäten 352 mit Engstellen. Eine spekulare Reflektion an der Oberseite (d.h. an der dem Streulicht zugewandte Seite) ist durch die tubuläre Form weniger wahrscheinlich als bei Kugel-förmigen Oberseiten.

Kennzeichnend für alle Maschengitter ist, dass die veränderlichen Kavitäten 352 durch ein Gewebe von langen Fasern, wie beispielsweise den Balken 70 oder den tubulären Elementen 71, gebildet werden. Hierzu ist anzumerken, dass auch Raumgitter-Strukturen wie Nickel-Schäume (diese werden in Batterie-Elektroden eingesetzt) die Merkmale (Kavitäten 352, veränderlicher Querschnitt, Engstellen usw.) erfüllen und dass diese in schwarz ausgeführt auch gut funktionieren.

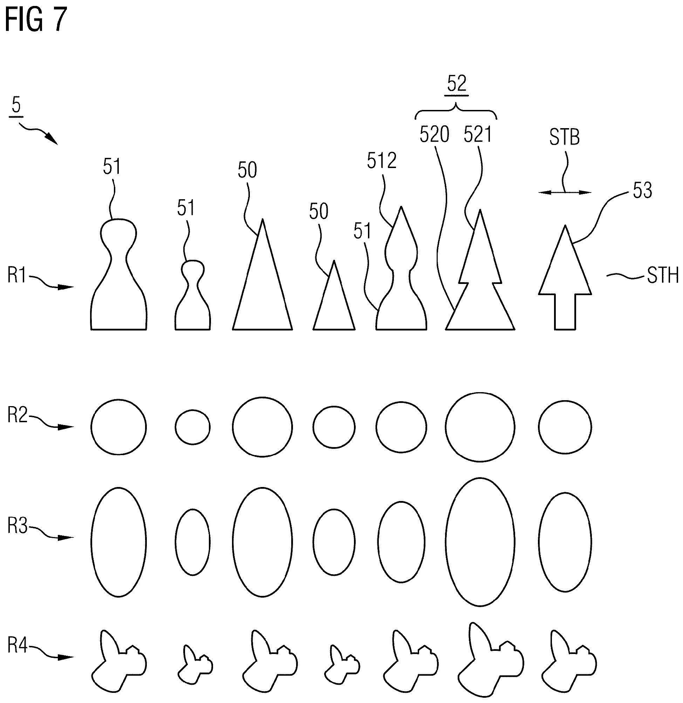

Fig.7 zeigt unterschiedliche Beispiele von Zapfen 5 in Seitenansicht und in Querschnitt (Draufsicht). Man erkennt in der Seitenansicht in der oberen Reihe R1 von links nach rechts: großer Halmazafen 51, kleiner Halmazapfen 51, großer Spitzkegel 50, kleiner Spitzkegel 50, Halmazapfen 51 mit Spitzhut 512, gestapelte Spitzkegel 520,521, die einen Tannenbaum 52 mit mehreren Etagen bilden, und Pfeilspitze 53, ähnlich einem Tannenbaum mit Stamm. Darunter finden sich im Querschnitt die jeweiligen Varianten in "rund" in der zweiten Reihe R2 von oben, in "elliptisch" in der dritten Reihe R3 von oben und mit "Freiform-Querschnitt" in der untersten Reihe R4.

Ein gewisser Nachteil der Halmazapfen 51 sind die sphärischen Oberseiten am Kopf 511. Hier findet das Licht einer Streulicht-Quelle immer eine direkte spekulare Reflektion zum Betrachter, wenn auch nur kleinflächig beziehungsweise punktuell. Dies wird vermieden bei dem Halmazapfen 51 mit aufgesetztem ,Spitzhut' 512. Hier ist auch der ,Tannenbaum' 52 und die Pfeilspitze 53 also der Spitzkegel auf dem Stamm (oder auf einem zweiten / dritten usw. Spitzkegel 520,521,52n) eine Lösung gemäß der Forderung ,Kavität 352 mit einer oder mehreren Engstellen'.

Man erkennt, daß die Strukturbreite STB bei allen der gezeigten Strukturen, hier Zapfen 5, kleiner ist als deren Strukturhöhe STH. Diese ist gleichzeitig die Höhe der zwischen den Strukturen entstehenden Kavitäten. Die Öffnungsweite dieser Kavitäten wiederum liegt bei enger Anordnung der Strukturen, wie gezeigt in Fig. 6, im Bereich der Strukturbreite STB. Das Verhältnis von Strukturhöhe STH zu Strukturbreite STB (gleich Öffnungsweite der Kavitäten bei enger Anordnung) weist einen Wert STH/STB > 1,5 auf. In den hier gezeigten Beispielen beträgt dieses Verhältnis in etwa den Wert Zwei.

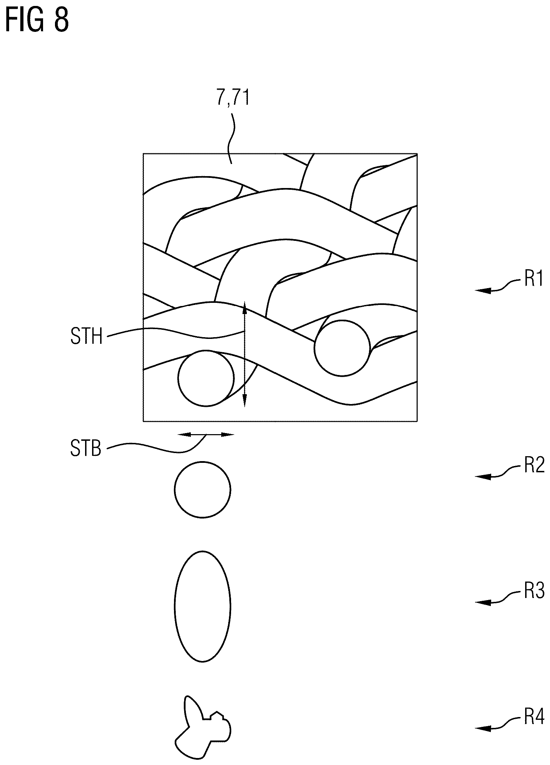

Fig.8 zeigt oben in Reihe R1 ein Beispiel-Gitter mit tubulären Elementen 71 in schräger Draufsicht. Darunter sind beispielhaft unterschiedliche Querschnitte der tubulären Elemente 71 gezeigt: rund in Reihe R2, elliptisch in Reihe R3 und in freier Kurve in Reihe R4. Man erkennt auch hier, daß das Verhältnis von Strukturhöhe STH zu Strukturbreite STB einen Wert STH/STB > 1,5 aufweist.

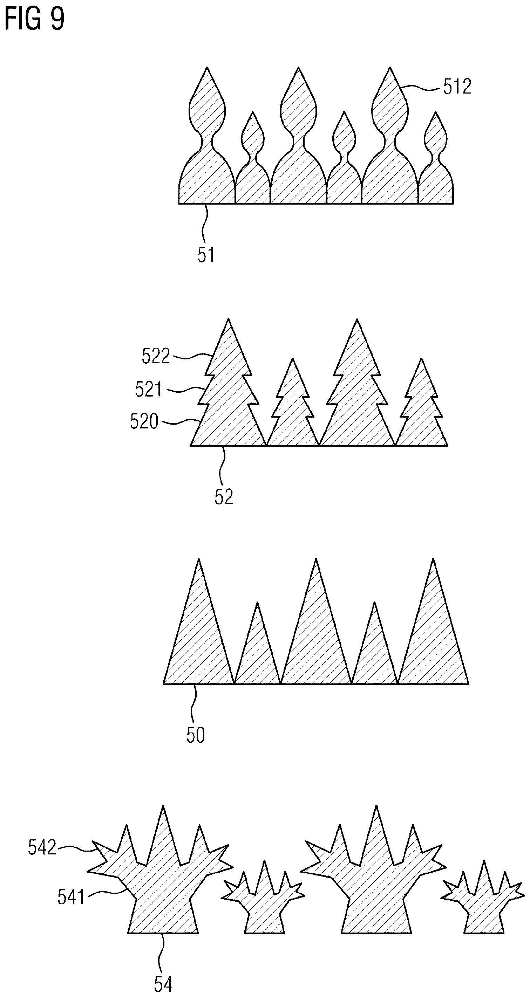

Fig.9 zeigt weitere vorteilhafte Oberflächenstrukturen mit unterschiedlichen Beispielen von Zapfen 5 in ausgeschnittener Querschnittsdarstellung. Links oben erkennt man Halmazapfen 51 mit aufgesetzten Spitzhüten 512 in unterschiedlichen Größen benachbart zueinander angeordnet. Oben in der Mitte sind Tannenbäume 52 mit drei Etagen von Spitzkegeln 520,521,522 und in unterschiedlichen Größen benachbart zueinander angeordnet. Rechts oben sind Spitzkegel 50 unterschiedlicher Größe benachbart zueinander angeordnet.

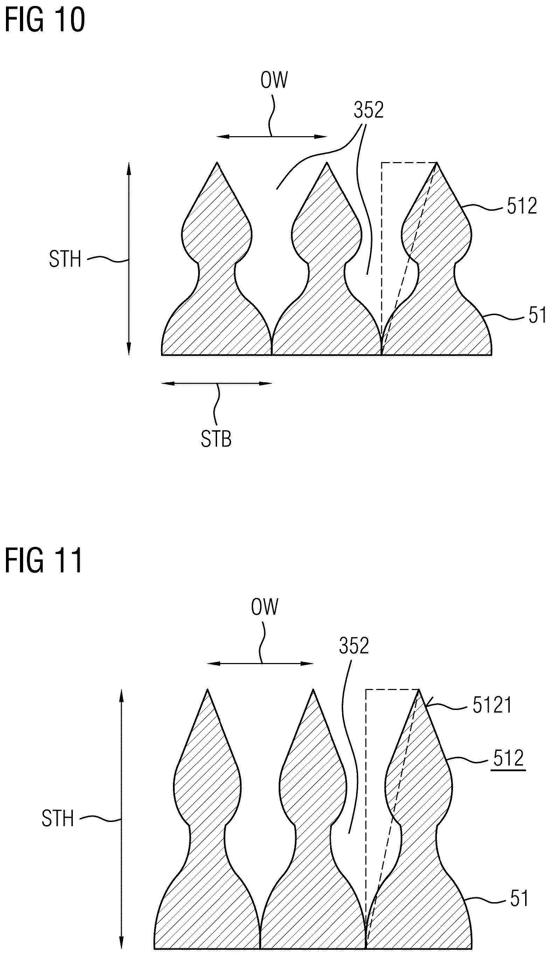

Fig.10 zeigt beispielhaft drei Halmazapfen 51 mit Spitzhut 512. Sie weisen gleiche Strukturbreite STB und Strukturhöhe STH auf. Die zwischen ihnen gebildeten Kavitäten 352 weisen eine Öffnungsweite OW auf, die in etwa der Strukturbreite STB entspricht. Das Verhältnis von Strukturhöhe STH zu Öffnungsweite OW beträgt in dieser Abbildung in etwa 2:1.

Fig.11 zeigt beispielhaft drei Halmazapfen 51 mit Spitzhut 512 wie zur vorherigen Abbildung. Sie weisen gleiche Strukturbreite STB und Strukturhöhe STH auf. Die zwischen ihnen gebildeten Kavitäten 352 weisen eine Öffnungsweite OW auf, die in etwa der Strukturbreite STB entspricht. Das Verhältnis von Strukturhöhe STH zu Öffnungsweite OW beträgt in dieser Abbildung in etwa 3:1. Man erkennt, dass die Flanken 5121 der Spitzhüte 512 recht steil sind. Von außerhalb der Kavitäten 352 einfallendes Licht wird somit größtenteils in die Kavität hinein reflektiert. Nur ein sehr geringer Anteil des durch die Öffnungsweite von außen einfallenden Lichts verläßt die Kavitäten 352 somit direkt oder nach nur wenigen Reflektionen wieder.

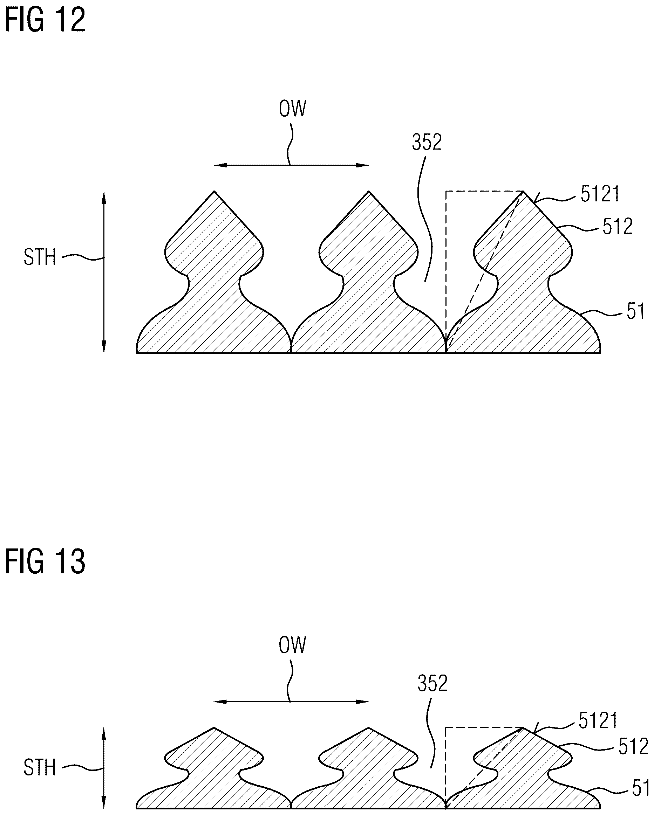

Fig.12 zeigt beispielhaft drei Halmazapfen 51 mit Spitzhut 512 wie zur vorherigen Abbildung. Das Verhältnis von Strukturhöhe STH zu Öffnungsweite OW beträgt in dieser Abbildung in etwa 1:1. Man erkennt, dass die Flanken 5121 der Spitzhüte 512 weniger steil sind als in der vorherigen Abbildung. Dennoch gelangt auch hier nur ein geringer Anteil des durch die Öffnungsweite von außen einfallenden Lichts direkt oder nach nur wenigen Reflektionen aus der jeweiligen Kavität hinaus.

Fig.13 zeigt beispielhaft drei Halmazapfen 51 mit Spitzhut 512 wie zur vorherigen Abbildung. Das Verhältnis von Strukturhöhe STH zu Öffnungsweite OW beträgt in dieser Abbildung in etwa 1:2. Man erkennt, dass die Flanken 5121 der Spitzhüte 512 noch weniger steil sind als in der vorherigen Abbildung. Dennoch gelangt auch hier nur ein relativ geringer Anteil des durch die Öffnungsweite von außen einfallenden Lichts direkt oder nach nur wenigen Reflektionen aus der jeweiligen Kavität hinaus.

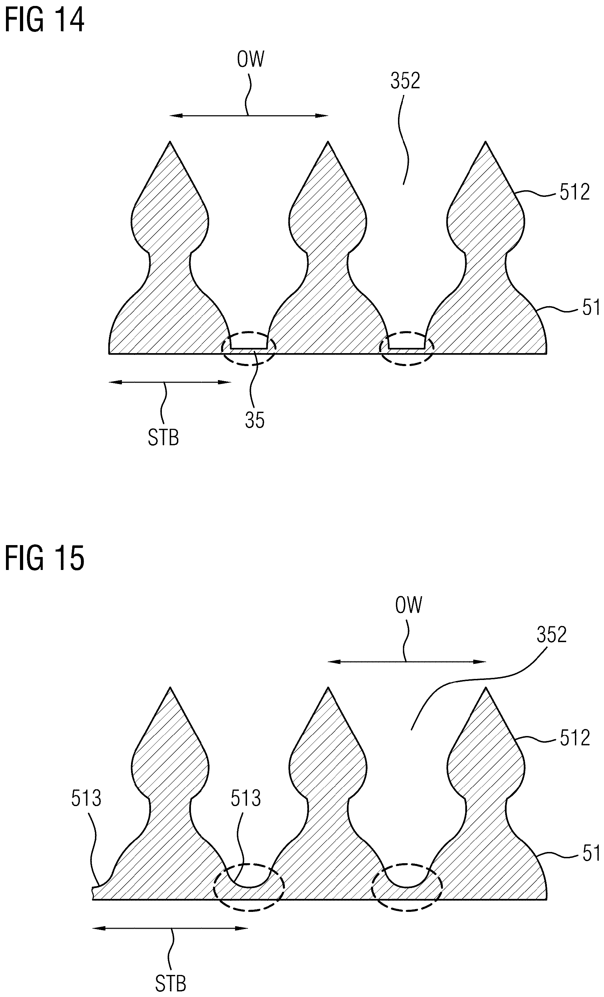

Fig.14 zeigt beispielhaft drei Halmazapfen 51 mit Spitzhut 512 wie zur vorherigen Abbildung. Die Halmazapfen sind hier in ihrem Fußbereich beabstandet. Somit weist die Öffnungsweite OW einen größeren Wert auf als die Strukturbreite STB. Man erkennt im gestrichelt markierten Bereich, daß ebene Bereiche der Oberseite der Wandung 35 vorhanden sind. Direkt auf diese Bereiche fallendes Licht wird zum größten Teil an Wandbereiche der Kavitäten 352 reflektiert, und daher zum größten Teil innerhalb der Kavitäten absorbiert.

Fig.15 zeigt beispielhaft drei Halmazapfen 51 mit Spitzhut 512 wie zur vorherigen Abbildung. Die Halmazapfen sind hier auch hier in ihrem Fußbereich beabstandet. Allerdings weisen die Halmazapfen 51 einen abgerundeten Fuß 513 auf. Somit weist die Öffnungsweite OW wieder in etwa denselben Wert auf wie die Strukturbreite STB. Man erkennt im gestrichelt markierten Bereich, daß keine ebenen Bereiche der Oberseite der Wandung 35 vorhanden sind. Somit kann noch weniger des durch die Öffnungsweite OW von außen einfallenden Lichts direkt oder nach nur wenigen Reflektionen die Kavität wieder verlassen.

Erfindungsgemäß wird vorgeschlagen, nicht unbedingt ,Zapfen' 5 nur einer einheitlichen Größe in einer regelmäßigen Anordnung zu verwenden, sondern mehrere Größen in einer gemischten Anordnung zu plazieren. Dies sorgt für variable Kavitäten 352 und Engstellen.

Im unteren Bereich der Fig.9 gezeigt ist die Möglichkeit von verzweigten Strukturen 54, also mehrstufigen ,Zapfen' 5 mit Verästelungen 541,542. Ultimativ ist es ein ,Wald' von ,Zapfen' 5 mit den dazwischen liegenden ,Kavitäten' 352, welche ähnlich wie ein echter Wald aus Bäumen möglichst viel Licht ,schlucken'.

Die vorgeschlagenen Anordnungen von Kavitäten 352 sind Volumen-Strukturen, die notwendigerweise eine gewisse Dicke aufweisen, welche jedoch umso geringer wird, je kleiner die Dimensionen darin (Zapfen 5, Stege 7 usw.) werden können. Dies ist zunächst ein Nachteil gegenüber ,dünnen' Beschichtungen, wie Narbungen oder Lackierungen. Wenn man jedoch zu kleineren Dimensionen skaliert und dabei die Anzahl der Strukturen pro Flächen-Einheit erhöht, kommt man auf praktikable Materialstärken.

Die erfindungsgemäßen Anordnungen von Kavitäten 352 waren bis zum jetzigen Aufkommen additiver Fertigungs-Verfahren sehr aufwändig herzustellen, weil sie nicht aus linear bewegten Werkzeugen entformbar sind (verlorene Formen sind sehr kostspielig). Der Erfinder hat erkannt, dass sich dies mit additiven Fertigungsverfahren zukünftig voraussichtlich einfacher realisieren lässt.

Die erfindungsgemäße Lösung trägt der Gegebenheit Rechnung, dass die Reflektion von Streulicht gleichzeitig diffus und spekular ist. Erfindungsgemäß werden sowohl die direkte spekulare Reflektion, als auch eine mehrstufige, zufällige Abfolge von spekularer und diffuser Reflektion zum Betrachter verhindert. Dies können erfindungsgemäße Kavitäten 352 mit Engstellen besser als alle linear zu entformenden Oberflächen.

Die Kavitäten 352 mit Engstellen wirken ähnlich wie eine Fisch-Reuse: Das Licht findet leichter hinein als heraus, sie sind sehr effektive ,Lichtschlucker', auch wenn die Roh-Material-Oberfläche mikroskopisch nicht besonders matt ist, es reichen einfache Beschichtungen oder Pigmentierungen aus.

Es hat sich herausgestellt: Tatsächlich werden bessere Schwarzwerte erreicht. Bereits die Halmazapfen 51 mit schwach matter Lackierung (Acryl Lack vom Baumarkt) können es mit Hochleistungs-Mattlacken oder Narbungen aller Art aufnehmen. Die Spitzkegel 50, Tannenbäume 52, Pfeilspitzen 53 sind noch "schwärzer", was sich in Messungen herausgestellt hat.

Ein weiterer Vorteil der erfindungsgemäßen Lösung ist auch das Erscheinungsbild. Die vorgeschlagenen Strukturen sind - makroskopisch (mit Abstand) betrachtet - ,homogen', anders als die prismenförmigen Rippen, welche als grobe Lichtfallen ein streifiges Bild im Sichtfeld erzeugen

Flächige Strukturen wie prismatische Rippen, Pyramiden etc. sind geometrisch einfach zu konstruieren und herzustellen, aber nachteilig wegen der direkten spekularen Reflektion. Solche Strukturen sind hauptsächlich in Anordnungen mit fester Geometrie der Störlichtquelle zum Betrachter geeignet. Das ist aber bei der Sonne als hauptsächliche Störlicht-Quelle bei Head-Up-Display-Gehäusen nicht der Fall. Sie kommt einmal von hier und einmal von dort, sowohl das Auto bewegt sich beim Fahren, als auch die Sonne bewegt sich im Lauf des Tages, beides von einem festen Bezugssystem Erde aus betrachtet.

Die Sonne ist als Störlichtquelle zudem außergewöhnlich hell. Bei guten Wetter-/Tages-Bedingungen liefert sie 1,6 Giga cd/m², was wiederum dazu führt, dass es extrem schwer ist, unter Sonneneinstrahlung Flächen sehr dunkel erscheinen zu lassen. Die Sonne liefert so viel Licht, dass auch eine mehrstufige spekulare und/oder diffuse Reflexion immer noch als Störlicht sehr hell in Relation zum Nutzlicht sein kann. Der Erfinder hat erkannt, dass dennoch mit spekularer und/oder diffuser Reflexion ein gutes Ergebnis erzielt werden kann, wenn erfindungsgemäße Kavitäten 352 vorgesehen werden.

## Patentansprüche

1. Gerät mit einer Optikeinheit (3), welche zumindest eine innenliegende Wandung (35) aufweist, die mit einer Oberflächenstruktur (351) versehen ist, **dadurch gekennzeichnet, daß** die Oberflächenstruktur (351) Kavitäten (352) aufweist.

2. Gerät nach Anspruch 1, **dadurch gekennzeichnet, daß** die Kavitäten (352) durch Zapfen (5,50,51,52,53) und/oder Stege (7,70,71) gebildet sind.

3. Gerät nach Anspruch 2, **dadurch gekennzeichnet, daß** die Zapfen (5,50,51,52,53) und/oder Stege (7,70,71) einerseits an der Wandung (35) angeordnet sind und andererseits an ihrer der Wandung (35) abgewandten Oberseite keine zur Wandung parallele plane Flächen aufweisen.

4. Gerät nach einem der Ansprüche 2-3, **dadurch gekennzeichnet, daß** die durch Zapfen (5,50,51,52,53) und/oder Stege (7,70,71) gebildeten Kavitäten (352) eine mittlere Öffnungsweite (OW) parallel zur Fläche der Wandung (35) und eine Höhe (STH) senkrecht zur Fläche der Wandung (35) aufweisen, wobei das Verhältnis von Höhe (STH) zu Öffnungsweite (OW) einen Wert von 0,5 oder größer aufweist.

5. Gerät nach einem der vorhergehenden Ansprüche, **dadurch gekennzeichnet, daß** die Kavitäten (352) einen unregelmäßig geformten Querschnitt aufweisen.

6. Gerät nach einem der vorhergehenden Ansprüche, **dadurch gekennzeichnet, daß** die Flanken der Kavitäten (352) und/oder die Zapfen (5,50,51,52,53) und/oder die Stege (7,70,71) unebene Begrenzungsflächen aufweisen.

7. Gerät nach einem der vorhergehenden Ansprüche, **dadurch gekennzeichnet, daß** die Flanken der Kavitäten (352) und/oder die Zapfen (5,50,51,52,53) und/oder die Stege (7,70,71) eine breitbandig lichtabsorbierende Oberfläche aufweisen.

8. Gerät nach einem der vorhergehenden Ansprüche, **dadurch gekennzeichnet, dass** die Kavitäten (352) an ihrer tiefsten Stelle zur Wandung (35) hin keinerlei ebene Flächen aufweisen.

9. Gerät nach einem der Ansprüche 2-8, **dadurch gekennzeichnet, daß** die Zapfen Spitzkegel (50) mit runder Basis sind.

10. Gerät nach einem der Ansprüche 2-8, **dadurch gekennzeichnet, daß** die Zapfen die Form eines Halmazapfens (51) mit Spitzhut (512) aufweisen.

11. Gerät nach einem der Ansprüche 2-10, **dadurch gekennzeichnet, daß** die Zapfen (5,50,51,52,53) und/oder die Stege (7,70,71) aus einem harten Material bestehen.

12. Gerät nach einem der Ansprüche 2-11, **dadurch gekennzeichnet, daß** die Zapfen (5,50,51,52,53) und/oder die Stege (7,70,71) aus einem Material bestehen, welches in einem additiven Verfahren aufbringbar ist, wobei die additiv erzeugten, kleinstmöglichen Volumen-Elemente sich nicht zu einer glatten Oberfläche verbinden, sondern wiederum eine Rauigkeit der Oberfläche erzeugen.

13. Head-Up-Display aufweisend ein Gerät nach einem der vorhergehenden Ansprüche.
